# EUROPÄISCHE PATENTSCHRIFT

(11) **EP 3 081 959 B1**
(45) Veröffentlichungstag und Bekanntmachung des Hinweises auf die Patenterteilung: **02.12.2020**
(21) Anmeldenummer: 16165476.9
(22) Anmeldetag: 15.04.2016
(51) Int. Cl.: G01S 13/931, G01S 15/931, G01S 17/931, G01S 7/40, G01S 7/497, G01S 7/52, G01S 13/87, G01S 17/87, G01S 15/87

(54) **VERFAHREN ZUM BESTIMMEN EINER JEWEILIGEN EINBAUPOSITION VON ZUMINDEST ZWEI SENSOREN EINES KRAFTFAHRZEUGS, STEUEREINRICHTUNG, FAHRERASSISTENZSYSTEM SOWIE KRAFTFAHRZEUG**
METHOD FOR DETERMINING A RESPECTIVE INSTALLATION POSITION OF AT LEAST TWO SENSORS OF A MOTOR VEHICLE, CONTROL DEVICE, DRIVER ASSISTANCE SYSTEM AND MOTOR VEHICLE
PROCEDE DE DETERMINATION D'UNE POSITION DE MONTAGE D'AU MOINS DEUX CAPTEURS D'UN VEHICULE AUTOMOBILE, DISPOSITIF DE COMMANDE, SYSTEME D'ASSISTANCE AU CONDUCTEUR ET VEHICULE AUTOMOBILE

(30) Priorität: 15.04.2015 DE 102015105720
(43) Veröffentlichungstag der Anmeldung: 19.10.2016
(73) Patentinhaber: Valeo Schalter und Sensoren GmbH, 74321 Bietigheim-Bissingen (DE)
(72) Erfinder: Spannan, Joerg, 74321 Bietigheim-Bissingen (DE); Kuenzler, Frank, 74321 Bietigheim-Bissingen (DE); Hammel, Timo, 74321 Bietigheim-Bissingen (DE)
(74) Vertreter: Withopf, Kristina

(56) Entgegenhaltungen:
- DE-A1- 10 122 664
- DE-A1-102008 000 571

## Beschreibung

Die vorliegende Erfindung betrifft ein Fahrerassistenzsystem für ein Kraftfahrzeug mit zumindest zwei Sensoren und mit einer Steuereinrichtung zum Durchführen eines Verfahren zum Bestimmen einer jeweiligen Einbauposition von zumindest zwei Sensoren eines Kraftfahrzeugs, bei welchem mittels einer Steuereinrichtung des Kraftfahrzeugs Daten von den zumindest zwei Sensoren, welche an und/oder in dem Kraftfahrzeug angeordnet sind, empfangen werden. Die vorliegende Erfindung betrifft außerdem ein Kraftfahrzeug.

Das Interesse richtet sich vorliegend auf Sensoren, die an und/oder im Kraftfahrzeug verbaut sind. Solche Sensoren können beispielsweise Teil eines Fahrerassistenzsystems des Kraftfahrzeugs sein. Mit Hilfe der Sensoren können beispielsweise Objekte in dem Umgebungsbereich des Kraftfahrzeugs erfasst werden. Ebenso können die Sensoren dazu genutzt werden, einen Abstand zwischen einem Kraftfahrzeug und dem Objekt zu bestimmen. Derartige Sensoren können beispielsweise Radarsensoren, Laserscanner oder Ultraschallsensoren sein. Um die Umgebung bzw. den Umgebungsbereich des Kraftfahrzeugs vollständig erfassen zu können, werden üblicherweise mehrere solcher Sensoren rund um das Kraftfahrzeug verbaut. Die Sensoren können dabei in entsprechenden Aussparungen eines Karosseriebauteils oder verdeckt hinter einem Karosseriebauteil angeordnet werden. Bei den Sensoren handelt es sich üblicherweise um Gleichteile, die an den Ecken des Kraftfahrzeugs und/oder mittig in der Front oder an einer Seitenfläche des Kraftfahrzeugs verbaut werden. Mit den Sensoren können entsprechende Messwerte bestimmt werden, die dann beispielsweise zur weiteren Auswertung an eine Steuereinrichtung des Kraftfahrzeugs übertragen werden. Eine solche Steuereinrichtung bzw. Recheneinrichtung kann beispielsweise durch ein Steuergerät des Kraftfahrzeugs gebildet sein.

Damit die Messsignale mit der Steuereinrichtung entsprechend ausgewertet werden können, muss der Steuereinrichtung die Position bzw. die Einbauposition jedes einzelnen Sensors bekannt sein. Ferner muss jeder Sensor beispielsweise für Diagnosezwecke individuell ansprechbar sein. Hierzu kann jedem der Sensoren eine einmalige Diagnosekennung zugeordnet werden, welche auch dynamisch vergeben werden kann. Um die jeweiligen Einbaupositionen der Sensoren zu bestimmen, sind aus dem Stand der Technik unterschiedliche Verfahren bekannt. Beispielsweise kann die Einbauposition der Sensoren mit Hilfe der Software festgelegt werden. Dabei bekommt jeder Sensor seine spätere Position vor der Installation bzw. dem Einbau programmiert. Dies kann durch das Setzen eines sogenannten Flags oder durch das Programmieren einer speziellen Softwarevariante geschehen. Der Nachteil hierbei ist, dass im Falle von Gleichteilen die Gefahr besteht, dass später der Sensor an einer falschen Einbauposition verbaut wird.

Ferner kann eine Vorkonfiguration des Sensors durch Software erfolgen. Dabei ist für jede Einbauposition eine neue Teilenummer notwendig. Zudem kann kein sogenannter Poka-Yoke-Verbau ermöglicht werden. Mit anderen Worten ein Poka-Yoke-Verbau ist dann gegeben, wenn ein aus mehreren Elementen bestehendes Prinzip, welches technische Vorkehrungen bzw. Einrichtungen zur sofortigen Fehleraufdeckung und -verhinderung umfasst, vorgesehen ist. Dabei kann es auch vorgesehen sein, dass eine Vorkonfiguration des Sensors durch Software und eine Poka-Yoke-Verbaucodierung erfolgt. Auch in diesem Fall ist für jede Einbauposition eine neue Teilenummer notwendig und es müssen unterschiedliche mechanische Bauteile bereitgestellt werden.

Weiterhin besteht die Möglichkeit, die Einbaulage durch eine sensorexterne Codierung zu bestimmen. Dazu wird beispielsweise ein externes Signal bereitgestellt, welches dem Sensor mitteilt, an welcher Einbauposition er verbaut ist. Solche Signale können beispielsweise dadurch bereitgestellt werden, dass ein Pin eines Steckers auf Masse oder auf Versorgungsspannung gelegt wird oder ein Pin "offen" gelassen wird. Hierbei kann typischerweise zwischen zwei Zuständen unterschieden werden. Beispielsweise zwischen dem Zustand "offen" und dem Zustand "Masse". Dies führt dazu, dass bei vier Sensoren, die an dem Fahrzeug angeordnet sind, zwei Pins benötigt werden, um die Einbauposition zu koordinieren.

Weiterhin kann es vorgesehen sein, dass die Steuereinrichtung mit einer Punkt-zu-Punkt-Verbindung zu jedem der Sensoren vorgesehen ist. Dies bedeutet, dass eine zusätzliche Steuereinrichtung bzw. ein zusätzliches Steuergerät benötigt wird. Zudem wird ein zusätzlicher Bus Transceiver in der Steuereinrichtung benötigt. Ferner bringt dies einen erhöhten Verkabelungsaufwand mit sich. Die oben beschriebenen Verfahren bringen häufig höhere Kosten mit sich. Beispielsweise müssen größere Stecker verwendet werden, es entstehen höhere Lagerkosten und/oder höhere Verwaltungskosten und zudem muss eine größere Teilevielfalt bereitgestellt werden.

In diesem Zusammenhang beschreibt die US 6,119,067 A ein Verfahren zum Korrigieren einer Einbauposition eines Radarsensors in einem Fahrzeug. Dabei kann mit einem Sensor ein Objekt in der Umgebung des Kraftfahrzeugs erfasst werden. Insbesondere kann mit dem Sensor ein Abstand zu dem Objekt bestimmt werden. In Abhängigkeit von dem bestimmten Abstand kann die Einbauposition des Sensors in dem Fahrzeug korrigiert werden. Das Verfahren soll insbesondere während eines Fertigungsprozesses ausgeführt werden, um den Radarsensor zu kalibrieren.

Weiterhin beschreibt die US 6,356,206 B1 ein Verfahren zum automatischen Kompensieren einer sich ändernden Einbaulage eines Radarsensors. Hierzu werden die Daten von zusätzlichen Sensoren, die an dem Kraftfahrzeug verbaut sind, herangezogen. Insbesondere Höhenschwankungen einer Karosserie eines Kraftfahrzeugs, in welchem der Radarsensor eingebaut ist, ausgeglichen werden.

DE 10 2008 000571 A1 beschreibt ein System zur Adressierung einer Mehrzahl von Sende- und Empfangseinheiten zur Ultraschallabstandsmessung mittels Aussenden von Ultraschallsignalen und Empfangen der von einem externen Gegenstand zurückgeworfenen Echos. Das System umfasst eine Adressen-Zuweisungseinrichtung zum Zuweisen einer eindeutigen Adresse an jede der Sende- und Empfangseinheiten auf Grundlage eines Unterscheides in einer Empfangseigenschaft der Sende- und Empfangseinheiten untereinander bezüglich des Empfangs der zurückgeworfenen Echos.

DE 101 22 664 A1 offenbart ein Verfahren zum Kalibrieren einer an einem Fahrzeug angebrachten optoelektronischen Sende-/Empfangseinrichtung zur optischen Erfassung der Umgebung des Fahrzeugs, bei dem das mit der Einrichtung versehene Fahrzeug in ein von mehreren Referenzobjekten gebildetes Kalibrierfeld gebracht wird. Mit der Einrichtung wird zumindest ein Teil des Kalibrierfeldes abgetastet und bei bekannter Position und/oder Ausrichtung des Fahrzeugs im Kalibrierfeld aus durch die Abtastung erhaltenen Abtastdaten einerseits und bekannten Kalibrierfelddaten andererseits die Position und/oder die Ausrichtung der Einrichtung am Fahrzeug ermittelt. Durch Abtasten zumindest eines Teils des Kalibrierfeldes wird mit der Einrichtung ein Bild des bekannten Anordnungsmusters der Referenzobjekte aus der Sicht der Einrichtung ermittelt und aus dem ermittelten Bild des Anordnungsmusters auf die Position der Einrichtung im Kalibrierfeld geschlossen.

Es ist Aufgabe der vorliegenden Erfindung, eine Lösung aufzuzeigen, wie die jeweilige Einbauposition von Sensoren des Kraftfahrzeugs einfacher und kostengünstiger bestimmt werden kann.

Diese Aufgabe wird erfindungsgemäß durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Fahrerassistenzsystem für ein Kraftfahrzeug weist zumindest zwei Sensoren und eine Steuereinrichtung auf, welche zum Durchführen eines Verfahren zum Bestimmen einer jeweiligen Einbauposition von zumindest zwei Sensoren eines Kraftfahrzeugs ausgebildet ist. Dabei werden mittels einer Steuereinrichtung des Kraftfahrzeugs Daten von den zumindest zwei Sensoren, welche an und/oder in dem Kraftfahrzeug angeordnet sind, empfangen. Darüber hinaus werden während eines Bewegens des Kraftfahrzeugs relativ zu zumindest einem Objekt mit jedem der zumindest zwei Sensoren fortlaufend Relativwerte bestimmt, welche einen jeweiligen Abstand und Winkel zwischen dem Sensor und dem zumindest einen Objekt beschreiben. Ferner wird die jeweilige Einbauposition der zumindest zwei Sensoren anhand der Relativwerte bestimmt, welche mit den zumindest zwei Sensoren bestimmt werden.

Das Verfahren dient dazu, die jeweiligen Einbaupositionen bzw. Verbaupositionen von Sensoren zu bestimmen, die an dem Kraftfahrzeug angeordnet sind. Die Einbauposition beschreibt dabei insbesondere die Position des jeweiligen Sensors an dem Kraftfahrzeug. Diese Sensoren können beispielsweise in entsprechenden Aussparungen in der Karosserie des Kraftfahrzeugs angeordnet sein. Die Sensoren können auch verdeckt hinter einem Karosseriebauteil angeordnet sein. Insbesondere können die Sensoren verteilt an der Karosserie des Kraftfahrzeugs angeordnet sein. Die Sensoren können beispielsweise als Radarsensoren, Ultraschallsensoren oder Laserscanner ausgebildet sein. Mit den Sensoren kann ein Objekt in einem Umgebungsbereich des Kraftfahrzeugs erfasst werden. Dazu kann der jeweilige Sensor ein Sendesignal aussenden, welches von dem Objekt reflektiert wird und wieder zu dem Sensor gelangt. Anhand der Laufzeit zwischen dem Aussenden des Sendesignals und dem Empfangen des reflektierten Sendesignals kann der Abstand zu dem Objekt bestimmt werden. Die Sensoren können ferner dazu ausgelegt sein, eine Relativgeschwindigkeit zwischen dem Sensor und dem Objekt zu bestimmen. Die Relativgeschwindigkeit kann beispielsweise anhand einer Dopplerverschiebung bestimmt werden.

Die Sensoren sind mit einer Steuereinrichtung des Kraftfahrzeugs zur Datenübertragung verbunden. Die Steuereinrichtung kann beispielsweise durch ein elektronisches Steuergerät des Kraftfahrzeugs bereitgestellt werden. Mit der Steuereinrichtung können die Messdaten, die mit den Sensoren erfasst werden, empfangen werden und gegebenenfalls weiter ausgewertet werden. Ferner kann die Steuereinrichtung dazu ausgelegt sein, die einzelnen Sensoren zu Diagnosezwecken anzusteuern bzw. in einem entsprechenden Diagnosemodus zu betreiben. Vorliegend sind die Sensoren an vorbestimmten Einbaupositionen an und/oder in dem Kraftfahrzeug verbaut bzw. angeordnet. Die jeweiligen Sensoren können beim Übertragen von Daten zu der Steuereinrichtung jeweils eine Kennung übermitteln. Damit kann die Steuereinrichtung bestimmen, von welches der Sensoren sie die Daten empfangen hat. In der Steuereinrichtung liegt insbesondere keine Information darüber vor, welcher Sensor an welcher Einbauposition angeordnet ist. Vorliegend sollen die jeweiligen Einbaupositionen der Sensoren nach dem Einbau der Sensoren bestimmt werden. Dies bedeutet, die Sensoren sind entsprechen an und/oder in dem Kraftfahrzeug montiert und sind zur Datenübertragung mit der Steuereinrichtung verbunden.

Zum Bestimmen der Einbauposition wird das Kraftfahrzeug relativ zu zumindest einem Objekt in dem Umgebungsbereich des Kraftfahrzeugs bewegt. Während des Bewegens des Kraftfahrzeugs relativ zu dem zumindest einen Objekt werden mit den zumindest zwei Sensoren Relativwerte bestimmt. Diese Relativwerte beschreiben jeweils den Abstand und Winkel zwischen dem Sensor und dem Objekt. Die Relativwerte können auch jeweils die Relativgeschwindigkeit zwischen dem Sensor und dem Objekt beschreiben. Das heißt mit einem ersten Sensor der zumindest zwei Sensoren wird während des Bewegens des Kraftfahrzeugs relativ zu dem Objekt kontinuierlich ein erster Relativwert ermittelt, welcher den Abstand und/oder die Relativgeschwindigkeit zwischen dem ersten Sensor und dem Objekt beschreibt. In gleicher Weise wird während des Bewegens des Kraftfahrzeugs relativ zu dem zumindest einen Objekt mit einem zweiten Sensor der zumindest zwei Sensoren fortlaufend ein zweiter Relativwert bestimmt, welcher den Abstand und/oder die Relativgeschwindigkeit zwischen dem ersten Sensor und dem Objekt beschreibt. Darüber hinaus wird die jeweilige Einbauposition der zumindest zwei Sensoren anhand der mit den zumindest zwei Sensoren bestimmten Relativwerten bestimmt. Durch dieses Verfahren wird eine elektrische Codierung oder eine Codierung mit Hilfe von Software überflüssig. Somit können Kosten eingespart werden.

Die jeweilige Einbauposition wird mit der Steuereinrichtung bestimmt. Hierbei kann die Steuereinrichtung von jedem der Sensoren Relativwerte erhalten, die während des Vorbeibewegens des Kraftfahrzeugs an dem Objekt bestimmt wurden. Mit anderen Worten wird mit den Sensoren ein zeitlicher Verlauf einer Position des Objekts in dem Umgebungsbereich des Kraftfahrzeugs bestimmt. Insbesondere kann der zeitliche Verlauf der jeweiligen Relativwerte der Sensoren mittels der Steuereinrichtung untersucht werden. Anhand des Verlaufs der Relativwerte kann dann die jeweilige Einbauposition jeder der Sensoren bestimmt bzw. abgeschätzt werden. Zusätzlich kann die jeweilige Einbauposition mit den zumindest zwei Sensoren selbst bestimmt werden. In diesem Fall können jeweiligen Sensoren selbst den Verlauf der Relativwerte untersuchen und hieraus ihre eigene Einbauposition ableiten.

In der Steuereinrichtung und/oder in den zumindest zwei Sensoren sind mögliche, vorbestimmte Einbaupositionen für die zumindest zwei Sensoren hinterlegt und die jeweilige Einbauposition der zumindest zwei Sensoren wird anhand der vorbestimmten Einbaupositionen bestimmt. In der Steuereinrichtung und/oder in den Sensoren selbst können beispielsweise Informationen hinterlegt sein, mit welchen möglichen Einbaupositionen die Sensoren eingebaut sein können. Auf diese Weise kann anhand der fortlaufend ermittelten Relativwerte die jeweilige Einbauposition der Sensoren abgeschätzt werden. Die abgeschätzten Einbaupositionen können dann den vorbestimmten Einbaupositionen zugeordnet werden. Somit kann die jeweilige Einbauposition der Sensoren an dem Kraftfahrzeug zuverlässig bestimmt werden.

Bevorzugt wird anhand einer Änderung der jeweiligen Relativwerte, die mit den zumindest zwei Sensoren bestimmt werden, die jeweilige Einbauposition bestimmt. Insbesondere kann mit der Steuereinrichtung und/oder mit den Sensoren selbst der jeweilige zeitliche Verlauf der Relativwerte, die mit den jeweiligen Sensoren beim Vorbeibewegen an dem Objekt bestimmt wurden, untersucht werden. Wenn sich der Abstand zwischen dem Sensor und dem Objekt in Abhängigkeit von der Zeit beispielsweise verringert, kann davon ausgegangen werden, dass sich der Sensor auf das Objekt zu bewegt. Ferner kann anhand der Relativwerte bzw. anhand des Abstands bestimmt werden, wie weit das Objekt von den jeweiligen Sensoren entfernt ist. Dabei kann auch berücksichtigt werden, dass das Objekt nicht mit einem der Sensoren erfasst wird. In diesem Fall kann beispielsweise davon ausgegangen werden, dass sich das Objekt auf einer der Einbauposition gegenüberliegenden Seite des Kraftfahrzeugs befindet. Somit kann die jeweilige Einbauposition der Sensoren kostengünstig ermittelt werden.

Erfindungsgemäß werden anhand der Änderung der jeweiligen Relativwerte Trajektorien in einem Sensorkoordinatensystem bestimmt und die jeweilige Einbauposition der zumindest zwei Sensoren anhand der Trajektorien bestimmt. Hierzu können die jeweiligen Sensoren in Abhängigkeit von der Zeit die Relativwerte ermitteln. Daraus können entsprechende Trajektorien bestimmt werden, welche den zeitlichen Verlauf bzw. den Verlauf des Abstands zu dem Objekt beschreiben. Diese Trajektorien können bezüglich eines jeweiligen Sensorkoordinatensystems der Sensoren bestimmt werden. Anhand der Trajektorien kann der zeitliche Verlauf der Änderung des Abstands bzw. der Änderung der relativen Lage zwischen den jeweiligen Sensoren und dem Objekt auf einfache Weise hergestellt werden. Somit kann die jeweilige Einbauposition der Sensoren einfach und zuverlässig bestimmt werden.

Es wird eine aktuelle Fahrtrichtung des Kraftfahrzeugs während des Bewegens des Kraftfahrzeugs relativ zu dem zumindest einen Objekt bestimmt und die jeweilige Einbauposition der zumindest zwei Sensoren wird anhand der Fahrtrichtung bestimmt.

In einer Ausgestaltung kann eine aktuelle Geschwindigkeit des Kraftfahrzeugs während des Bewegens des Kraftfahrzeugs relativ zu dem zumindest einen Objekt bestimmt werden und die jeweilige Einbauposition der zumindest zwei Sensoren anhand der Geschwindigkeit bestimmt werden.

Die Fahrtrichtung und/oder die aktuelle Geschwindigkeit des Kraftfahrzeugs während des Vorbeibewegens an dem Objekt kann beispielsweise mittels Odometrie bestimmt werden. Hierzu kann ein Lenkwinkel des Kraftfahrzeugs bestimmt werden. Zudem können die Radumdrehungen zumindest eines Rads des Kraftfahrzeugs erfasst werden. Anhand dieser Informationen kann die aktuelle Fahrtrichtung und/oder die aktuelle Geschwindigkeit des Kraftfahrzeugs ermittelt werden. Die Odometriedaten, welche die aktuelle Fahrtrichtung und/oder die aktuelle Geschwindigkeit des Kraftfahrzeugs beschreiben, können über einen Fahrzeugdatenbus an die Steuereinrichtung und/oder an die jeweiligen Sensoren übertragen werden. Auf diese Weise kann die Steuereinrichtung und/oder die jeweiligen Sensoren selbst die Odometriedaten nutzen, um die Einbauposition der jeweiligen Sensoren zu bestimmen. Wenn das Kraftfahrzeug beispielsweise in Vorwärtsrichtung bewegt wird und das Objekt zunächst mit einem ersten Sensor und anschließend mit einem zweiten Sensor erfasst wird, kann davon ausgegangen werden, dass der erste Sensor bezüglich der Fahrtrichtung vor dem zweiten Sensor angeordnet ist. Ferner kann anhand der aktuellen Geschwindigkeit des Kraftfahrzeugs und der fortlaufend ermittelten Relativwerte die Einbauposition der jeweiligen Sensoren bestimmt werden.

Es wird eine zeitliche Änderung einer Position des zumindest einen Objekts bestimmt und die jeweilige Einbauposition der zumindest zwei Sensoren anhand der zeitlichen Änderung der Position des zumindest einen Objekts bestimmt. Zusätzlich zu dem Abstand zu dem zumindest einen Objekt wird auch die Position des zumindest einen Objekts bestimmt. Die Position des zumindest einen Objekts kann beispielsweise mittels Triangulation bestimmt werden. Auf diese Weise kann neben der Entfernung zu dem Objekt auch ein Winkel zwischen einer Bezugslinie und dem Objekt bestimmt werden. Anhand der ermittelten Position des Objekts in der Umgebung des Kraftfahrzeugs kann eine eineindeutige Zuordnung des Objekts zu einem der Sensoren erfolgen. Die Position des Objekts kann fortlaufend beziehungsweise zu vorbestimmten Zeitpunkten bestimmt werden. Somit kann ermittelt werden, wie sich die Position des zumindest einen Objekts bezüglich der jeweiligen Sensoren in Abhängigkeit von der Zeit ändert. Dabei kann auch eine zeitliche Änderung des Winkels zu dem Objekt bestimmt werden und die jeweilige Einbauposition der zumindest zwei Sensoren anhand der zeitlichen Änderung des Winkels bestimmt werden. Dabei können die Steuereinrichtung und/oder die jeweiligen Sensoren den zeitlichen Verlauf der Position des zumindest einen erfassten Objekts mit einem erwarteten Verlauf der Position des zumindest einen Objekts vergleichen. Der erwartete Verlauf der Position kann anhand der Odometriedaten bestimmt werden. Damit kann die jeweilige Einbauposition der zumindest zwei Sensoren zuverlässig bestimmt werden.

In einer Ausgestaltung ist das zumindest eine Objekt, zu welchem das Kraftfahrzeug relativ bewegt wird, stationär. Dabei kann es auch vorgesehen sein, dass mehrere Objekte in dem Umgebungsbereich des Kraftfahrzeugs bzw. eine Infrastruktur in dem Umgebungsbereich des Kraftfahrzeugs erfasst wird. Dabei ist es auch denkbar, dass das Objekt relativ zu dem Kraftfahrzeug bewegt wird. Beispielsweise kann das Objekt geradlinig zu dem Kraftfahrzeug bewegt werden.

Die Steuereinrichtung für das Fahrerassistenzsystem des Kraftfahrzeugs ist zum Durchführen des Verfahrens ausgelegt. Insbesondere ist die Steuereinrichtung zur Datenübertragung mit den jeweiligen Sensoren verbunden. Die Steuereinrichtung kann eine Speichereinheit aufweisen, auf der die möglichen vorbestimmten Einbaupositionen der Sensoren hinterlegt sind. Zudem können die jeweiligen Erfassungsbereiche der Sensoren auf der Speichereinheit hinterlegt sein. Die Steuereinrichtung kann zudem zur Datenübertragung mit einem Lenkwinkelsensor und/oder einem Sensor, mit dem die Raddrehzahl zumindest eines Rades des Kraftfahrzeugs erfasst wird, verbunden sein.

Ein erfindungsgemäßes Fahrerassistenzsystem für ein Kraftfahrzeug umfasst die Steuereinrichtung. Das Fahrerassistenzsystem kann zudem dazu ausgelegt sein, den Fahrer beim Führen des Kraftfahrzeugs zu unterstützen. Das Fahrerassistenzsystem kann beispielsweise ein Abstandsregeltempomat, ein Spurhalteassistent, ein Spurwechselassistent und/oder eine Einparkhilfe sein. Das Fahrerassistenzsystem umfasst die zwei Sensoren, die beispielsweise als Radarsensoren, Ultraschallsensoren und/oder als Laserscanner ausgebildet sind. Die Sensoren können eine Recheneinheit aufweisen, mit der die jeweilige Einbauposition des Sensors selbst anhand der erfassten Relativwerte bestimmt werden kann. Ferner können die Sensoren jeweils eine Speichereinheit aufweisen, auf der die möglichen vorbestimmten Einbaupositionen der Sensoren hinterlegt sind. Zudem können die jeweiligen Erfassungsbereiche der Sensoren auf der Speichereinheit hinterlegt sein. Die jeweiligen Sensoren können zudem zur Datenübertragung mit einem Lenkwinkelsensor und/oder einem Sensor, mit dem die Raddrehzahl zumindest eines Rades des Kraftfahrzeugs erfasst wird, verbunden sein. Somit können die Sensoren die Odometriedaten, welche die aktuelle Fahrtrichtung und/oder die aktuelle Geschwindigkeit des Kraftfahrzeugs beschreiben, zur Bestimmung der Einbauposition nutzen. Dabei kann es vorgesehen sein, dass jeder der Sensoren selbst seine Einbauposition bestimmt und die bestimmte Einbauposition an die Steuereinrichtung überträgt.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die Erfindung wir nun anhand von bevorzugten Ausführungsbeispielen sowie unter Bezugnahme auf die beigefügten Zeichnungen näher erläutert.

Dabei zeigen:
- Fig. 1: in schematischer Darstellung ein Kraftfahrzeug gemäß einer Ausführungsform der vorliegenden Erfindung, welches ein Fahrerassistenzsystem mit einer Mehrzahl von Sensoren umfasst;
- Fig. 2: zwei Sensoren des Fahrerassistenzsystems und deren Orientierung;
- Fig. 3: die Orientierung der zwei Sensoren gemäß Fig. 2 bezüglich des Kraftfahrzeugs;
- Fig. 4: zwei Objekte, zu welchen das Kraftfahrzeug relativ bewegt wird, wobei jeder der Sensoren einen Erfassungsbereich aufweist; und
- Fig. 5: Trajektorien der Messungen, die mit den jeweiligen Sensoren von den Objekten bestimmt wurden.

In den Figuren werden gleiche und funktionsgleiche Elemente mit den gleichen Bezugszeichen versehen.

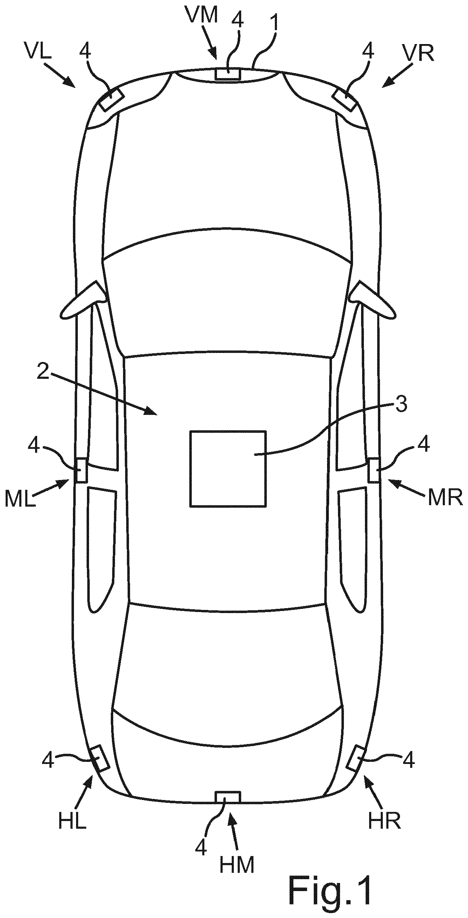

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, mittels welchem ein Fahrer beim Führen des Kraftfahrzeugs 1 unterstützt werden kann. Das Fahrerassistenzsystem 2 kann beispielsweise ein Abstandsregeltempomat, ein Spurhalteassistent, ein Spurwechselassistent, ein System zur Totwinkelüberwachung und/oder eine Einparkhilfe sein.

Das Fahrerassistenzsystem 2 umfasst ferner eine Steuereinrichtung 3. Die Steuereinrichtung 3 kann beispielsweise durch ein Steuergerät des Kraftfahrzeugs 1 bereitgestellt sein. Darüber hinaus umfasst das Fahrerassistenzsystem 2 eine Mehrzahl von Sensoren 4. In dem vorliegenden Ausführungsbeispiel umfasst das Fahrerassistenzsystem 2 acht Sensoren 4. Die Sensoren 4 sind verteilt an dem Kraftfahrzeug 1 angeordnet. Mit den Sensoren können Objekte 6, 7 in einem Umgebungsbereich des Kraftfahrzeugs 1 erfasst werden. Die Sensoren 4 dienen insbesondere dazu, einen Abstand zu zumindest einem Objekt 6, 7 in dem Umgebungsbereich des Kraftfahrzeugs 1 zu bestimmen. Hierzu können die Sensoren 4 beispielsweise ein Sendesignal aussenden und das von dem Objekt 6, 7 reflektierte Sendesignal wieder empfangen. Anhand der Laufzeit kann dann der Abstand zu dem zumindest einen Objekt 6, 7 bestimmt werden. Ferner können die Sensoren dazu ausgelegt sein, eine Relativgeschwindigkeit zwischen dem Kraftfahrzeug 1 und dem zumindest einen Objekt 6, 7 zu bestimmen. Die Sensoren 4 können beispielsweise als Radarsensoren, Laserscanner oder als Ultraschallsensoren ausgebildet sein. Die Sensoren 4 sind insbesondere baugleich ausgebildet bzw. als Gleichteile ausgestaltet.

Die Sensoren 4 sind an vorbestimmten Einbaupositionen VL, VM, VR, ML, MR, HL, HM und HR angeordnet. Dabei beschreibt die Einbauposition VL, dass der Sensor 4 in einem vorderen linken Bereich des Kraftfahrzeugs 1 angeordnet ist. Die Einbauposition VM beschreibt, dass der Sensor 4 im vorderen mittleren Bereich des Kraftfahrzeugs 1 angeordnet ist. Die Einbauposition VR beschreibt, dass der Sensor 4 in einem vorderen rechten Bereich des Kraftfahrzeugs 1 angeordnet ist. Die Einbauposition ML beschreibt, dass der Sensor 4 in einem mittleren Bereich auf der linken Seite des Kraftfahrzeugs 1 angeordnet ist. Die Einbauposition MR beschreibt, dass der Sensor 4 in einer mittleren Position auf der rechten Seite des Kraftfahrzeugs 1 angeordnet ist. Die Einbauposition HL beschreibt, dass der Sensor 4 in einem hinteren linken Bereich des Kraftfahrzeugs 1 angeordnet ist. Die Einbauposition VM beschreibt, dass der Sensor 4 in einem hinteren mittleren Bereich des Kraftfahrzeugs 1 angeordnet ist. Die Einbauposition HR beschreibt, dass der Sensor 4 in einem hinteren rechten Bereich des Kraftfahrzeugs 1 angeordnet ist.

Vorliegend sind die Sensoren 4 in und/oder an den Einbaupositionen VL, VM, VR, ML, MR, HL, HM, HR eingebaut. Ferner sind die Sensoren 4 jeweils zur Datenübertragung mit der Steuereinrichtung 3 verbunden. Ein entsprechender Datenbus ist vorliegend der Übersichtlichkeit halber nicht dargestellt. Über den Datenbus, der beispielsweise als CAN-Bus, als FlexRay-Verbindung oder als Ethernet-Verbindung ausgebildet sein kann, können die jeweiligen Messdaten, die mit den Sensoren 4 bestimmt werden, an die Steuereinrichtung 3 übertragen werden. Zudem können die jeweiligen Sensoren 4 dazu ausgebildet sein, dass sie die Messdaten zusammen mit einer entsprechenden Kennung an die Steuereinrichtung 3 übermitteln. Somit kann die Steuereinrichtung bestimmen, von welchem der Sensoren 4 sie die Messdaten erhalten hat. Der Steuereinrichtung 3 ist aber nicht bekannt, an welcher Einbauposition VL, VM, VR, ML, MR, HL, HM, HR welcher der Sensoren 4 verbaut ist.

Die Steuereinrichtung 3 und/oder die Sensoren 4 kann zudem eine Speichereinheit umfassen, auf der die möglichen Einbaupositionen VL, VM, VR, ML, MR, HL, HM, HR für die Sensoren 4 hinterlegt sind. Ferner kann auf der Speichereinheit eine Information bezüglich der jeweiligen Erfassungsbereiche 10 der Sensoren 4 hinterlegt sein. Die jeweiligen Erfassungsbereiche 10 beschreiben den Bereich, in dem mit dem jeweiligen Sensor 4 ein Objekt 6, 7 erfasst werden kann. Darüber hinaus kann das Fahrerassistenzsystem 2 eine entsprechende Sensoreinrichtung umfassen, mit der die aktuelle Fahrtrichtung und/oder die aktuelle Geschwindigkeit des Kraftfahrzeugs 1 ermittelt werden kann. Diese kann mit der Steuereinrichtung 3 und/oder mit den Sensoren 4 zur Datenübertragung verbunden sein.

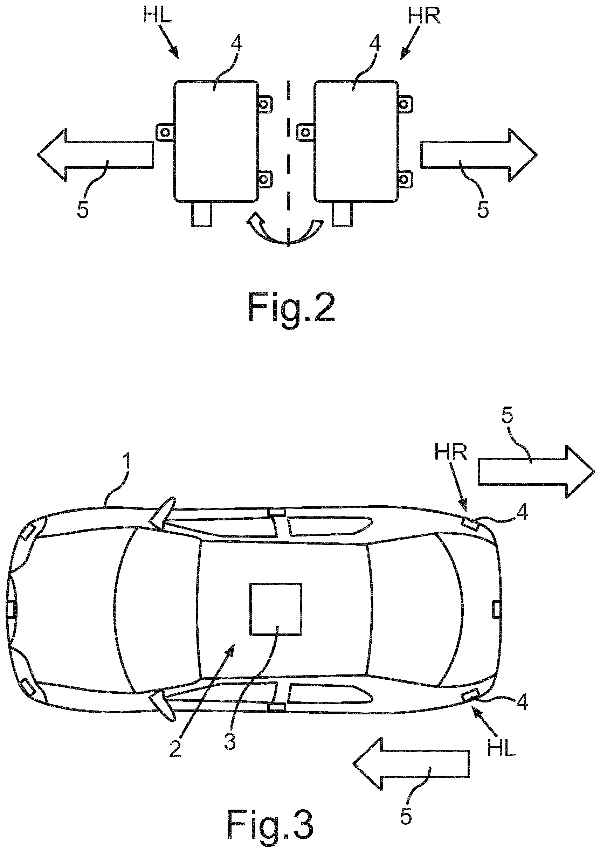

Fig. 2 zeigt beispielhaft die beiden Sensoren 4, die an den Einbaupositionen HL und HR verbaut sind. Dabei beschreibt der jeweilige Pfeil 5, der den Sensoren 4 zugeordnet ist, eine Orientierung der Sensoren 4. Hierbei ist zu erkennen, dass die Orientierung der beiden Sensoren 4 quasi vertikal zueinander gedreht ist. Wenn die jeweilige Verbauposition HL, HR dieser beiden Sensoren 4 nicht bekannt ist, würde der Sensor 4, der an der Einbauposition HR verbaut ist, die Front des Kraftfahrzeugs 1 fälschlich nach hinten vermuten. Dies ist anhand von Fig. 3 erläutert. Wenn das Kraftfahrzeug 1 vorwärts bewegt wird und mit den beiden Sensoren 4 ein statisches Objekt 6, 7 erfasst wird, würde der Sensor 4, der an der Einbauposition HL verbaut ist erkennen, dass sich das Objekt 6, 7von vorn nähert und nach hinten entfernt. Im Gegensatz dazu würde der Sensor 4, der an der Einbauposition HR eingebaut ist, beim Vorwärtsfahren detektieren, dass sich das Objekt 6, 7 von hinten nähert und nach vorne entfernt. Dies stellt einen Widerspruch dar. Nachfolgend wird erläutert, wie dieser Widerspruch beseitigt werden kann. Zudem wird erläutert, wie die jeweiligen Einbaupositionen VL, VM, VR, ML, MR, HL, HM, HR der Sensoren 4 bestimmt werden können.

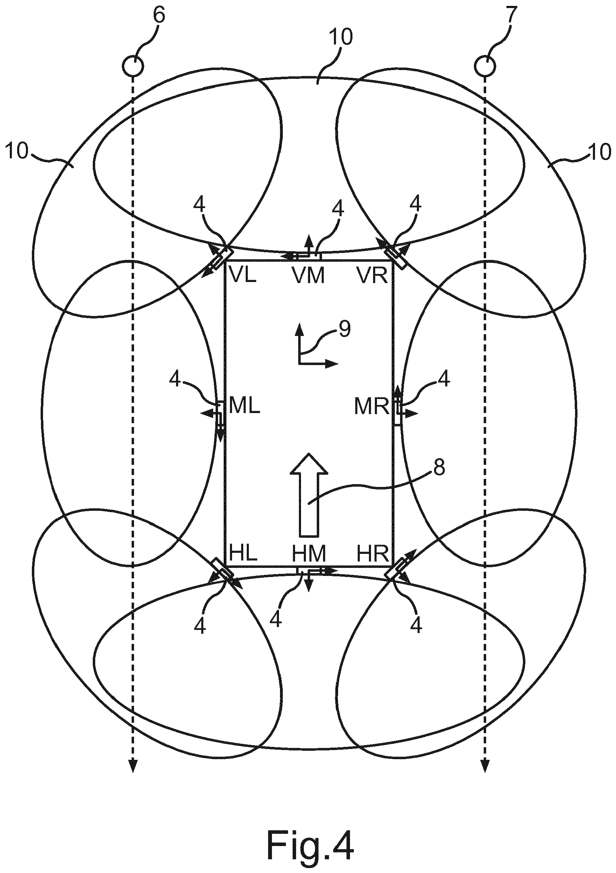

Fig. 4 zeigt das Kraftfahrzeug 1 in einer weiteren Ausführungsform. Hier befinden sich in dem Umgebungsbereich des Kraftfahrzeugs 1 die beiden Objekte 6 und 7. Das Objekt 6 ist auf einer linken Seite des Kraftfahrzeugs 1 angeordnet und das Objekt 7 ist auf einer rechten Seite des Kraftfahrzeugs 1 angeordnet. Vorliegend soll das Kraftfahrzeug 1 relativ zu diesen beiden Objekten 6, 7 bewegt werden. Dazu wird das Kraftfahrzeug 1 in Vorwärtsrichtung bewegt. Dies ist vorliegend durch den Pfeil 8 gekennzeichnet. Zudem sind die jeweiligen Erfassungsbereiche 10 der Sensoren 4 dargestellt.

Wenn das Kraftfahrzeug 1 relativ zu den Objekten 6, 7 bewegt wird, wird das linke Objekt 6 zunächst mit dem Sensor 4 erfasst, der an der Einbauposition VL eingebaut ist. Anschließend wird das Objekt 6 mit dem Sensor 4 erkannt, welcher sich an der Einbauposition VM befindet. Anschließend wird das Objekt 6 mit dem Sensor 4 erfasst, welcher sich an der Einbauposition ML befindet. Danach wird das Objekt 6 mit dem Sensor 4 erfasst, welcher sich an der Einbauposition HL befindet. Schließlich wird das Objekt mit dem Sensor 4 erfasst, welcher sich an der Einbauposition HM befindet. Beim Vorbeibewegen des Kraftfahrzeugs an dem Objekt 7 wird das Objekt 7 zunächst mit dem Sensor 4, der an der Einbauposition VR angeordnet ist, anschließend mit dem Sensor 4, welcher an der Einbauposition VM angeordnet ist, danach mit dem Sensor 4, der an der Einbauposition MR angeordnet ist, danach mit dem Sensor 4, der an der Einbauposition HR angeordnet ist, und schließlich mit dem Sensor 4, der an der Einbauposition HM angeordnet ist, erfasst.

Mit den jeweiligen Sensoren 4 werden während des Vorbeibewegens des Kraftfahrzeugs 1 an den Objekten 6, 7 Relativwerte bestimmt, welche jeweils den Abstand und/oder die Relativgeschwindigkeit zwischen dem Sensor 4 und dem Objekt 6, 7 beschreiben. Diese Relativwerte können von den jeweiligen Sensoren 4 an die Steuereinrichtung 3 übermittelt werden. In der Steuereinrichtung 3 und/oder in den Sensoren 4 selbst sind - wie zuvor erwähnt - die möglichen Einbaupositionen VL, VM, VR, ML, MR, HL, HM, HR bezüglich eines Fahrzeugkoordinatensystems 9 hinterlegt. Des Weiteren können in der Steuereinrichtung 3 und/oder in den Sensoren 4 die Erfassungsbereiche 10 hinterlegt sein. Zudem werden der Steuereinrichtung 3 und/oder den Sensoren 4 Informationen bezüglich der Fahrtrichtung und/oder der aktuellen Geschwindigkeit des Kraftfahrzeugs 1 bereitgestellt.

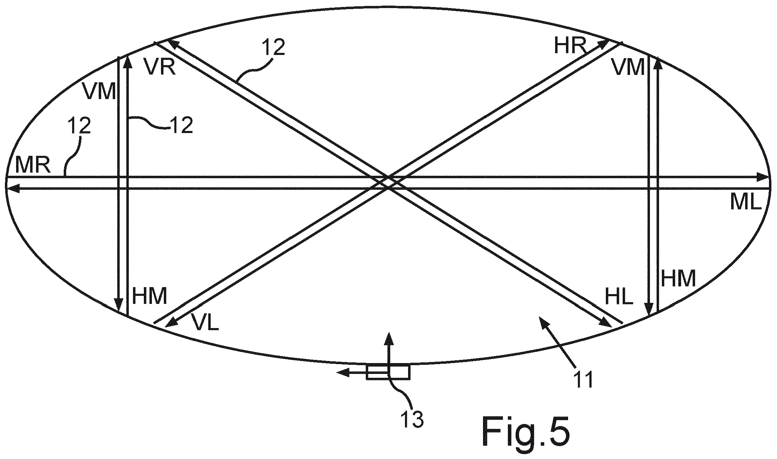

Mit den jeweiligen Sensoren 4 können nun unabhängig voneinander jeweilige Trajektorien 12 bezüglich der Objekte 6, 7 in einem gemeinsamen Sensorkoordinatensystem 13 bestimmt werden. Dies ist in Fig. 5 dargestellt. Anhand dieser Trajektorien 12 kann die Steuereinrichtung 3 und/oder die Sensoren 4 selbst die Einbauposition VL, VM, VR, ML, MR, HL, HM, HR der Sensoren 4 bestimmen. Die Einbauposition VL, VM, VR, ML, MR, HL, HM, HR jedes der Sensoren 4 lässt sich über die charakteristische Bewegung in dem Sensorkoordinatensystem 13 bestimmen. Die Trajektorien 12 werden je nach Abstand zu den Objekten 6, 7 parallel verschoben. Dabei muss darauf geachtet werden, dass sich jegliche Winkelbereiche, unter Berücksichtigung eines Winkelfehlers nicht überlappen. Dabei kann es ferner vorgesehen sein, dass die mit der Steuereinrichtung 3 und/oder mit den Sensoren 4 bestimmten Einbaupositionen VL, VM, VR, ML, MR, HL, HM, HR mit den Sensoren 4 zudem validiert werden. Dies kann am einfachsten erreicht werden, indem man kontrolliert, ob jede der Einbaupositionen VL, VM, VR, ML, MR, HL, HM, HR genau einmal in dem Gesamtsystem vorkommt. Weiterhin werden die Ergebnisse zuverlässiger, wenn die Trajektorien 12 über mehrere Sensoren 4 hinweg bestimmt und ausgewertet werden. Somit kann auch ein größerer Winkelfehler toleriert werden.

## Patentansprüche

1. Fahrerassistenzsystem (2) für ein Kraftfahrzeug (1) mit zumindest zwei Sensoren und mit einer Steuereinrichtung (3), welche zum Durchführen eines Verfahrens zum Bestimmen einer jeweiligen Einbauposition (VL, VM, VR, ML, MR, HL, HM, HR) von zumindest zwei Sensoren (4) eines Kraftfahrzeugs (1) ausgebildet ist, bei welchem mittels einer Steuereinrichtung (3) des Kraftfahrzeugs (1) Daten von den zumindest zwei Sensoren (4), welche an und/oder in dem Kraftfahrzeug (1) angeordnet sind, empfangen werden,
**dadurch gekennzeichnet, dass**
die zumindest zwei Sensoren (4) als Radarsensoren und/oder als Laserscanner ausgebildet sind, dass eine aktuelle Fahrtrichtung des Kraftfahrzeugs (1) während des Bewegens des Kraftfahrzeugs (1) relativ zu zumindest einem Objekt (6, 7) bestimmt wird, wobei das zumindest eine Objekt (6, 7), zu welchem das Kraftfahrzeug (1) relativ bewegt wird, stationär ist oder das Objekt (6, 7) gradlinig relativ zu dem Kraftfahrzeug bewegt wird, dass während eines Bewegens des Kraftfahrzeugs (1) relativ zu dem zumindest einen Objekt (6, 7) mit jedem der zumindest zwei Sensoren (4) fortlaufend Relativwerte bestimmt werden, welche einen jeweiligen Abstand und Winkel zwischen dem Sensor (4) und dem zumindest einen Objekt (6, 7) als Position des zumindest einen Objekts (6, 7) beschreiben, so dass eine zeitliche Änderung der Position des zumindest einen Objekts (6, 7) bestimmt wird, dass anhand einer Änderung der jeweiligen Relativwerte Trajektorien (12) in einem Sensorkoordinatensystem (13) bestimmt werden, dass in der Steuereinrichtung (3) und/oder in den zumindest zwei Sensoren mögliche, vorbestimmte Einbaupositionen (VL, VM, VR, ML, MR, HL, HM, HR) für die zumindest zwei Sensoren (2) hinterlegt sind, und die jeweilige Einbauposition (VL, VM, VR, ML, MR, HL, HM, HR) der zumindest zwei Sensoren (4) anhand der bestimmten Trajektorien (12) und anhand der vorbestimmten hinterlegten Einbaupositionen (VL, VM, VR, ML, MR, HL, HM, HR) und der Fahrtrichtung bestimmt wird.

2. Fahrerassistenzsystem nach Anspruch 1,
**dadurch gekennzeichnet, dass**
eine aktuelle Geschwindigkeit des Kraftfahrzeugs (1) während des Bewegens des Kraftfahrzeugs (1) relativ zu dem zumindest einen Objekt (6, 7) bestimmt wird und die jeweilige Einbauposition (VL, VM, VR, ML, MR, HL, HM, HR) der zumindest zwei Sensoren (4) zusätzlich anhand der Geschwindigkeit bestimmt wird.

3. Kraftfahrzeug (1) mit einem Fahrerassistenzsystem (2) nach einem der vorhergehenden Ansprüche.

## Claims

1. Driver assistance system (2) for a motor vehicle (1) having at least two sensors and having a control device (3) which is designed to carry out a method for determining a respective installation position (VL, VM, VR, ML, MR, HL, HM, HR) of at least two sensors (4) of a motor vehicle (1), in which data from the at least two sensors (4) arranged on and/or in the motor vehicle (1) are received by means of a control device (3) of the motor vehicle (1), **characterized in that**
the at least two sensors (4) are in the form of radar sensors and/or laser scanners, **in that** a current direction of travel of the motor vehicle (1) is determined during movement of the motor vehicle (1) relative to at least one object (6, 7), wherein the at least one object (6, 7), relative to which the motor vehicle (1) is moved, is stationary or the object (6, 7) is moved in a straight line relative to the motor vehicle, **in that** relative values which describe a respective distance and angle between the sensor (4) and the at least one object (6, 7) as the position of the at least one object (6, 7) are continuously determined during movement of the motor vehicle (1) relative to the at least one object (6 7) using each of the at least two sensors (4), with the result that a temporal change in the position of the at least one object (6, 7) is determined, **in that** trajectories (12) are determined in a sensor coordinate system (13) on the basis of a change in the respective relative values, **in that** possible predetermined installation positions (VL, VM, VR, ML, MR, HL, HM, HR) for the at least two sensors (2) are stored in the control device (3) and/or in the at least two sensors, and the respective installation position (VL, VM, VR, ML, MR, HL, HM, HR) of the at least two sensors (4) is determined on the basis of the determined trajectories (12) and on the basis of the predetermined stored installation positions (VL, VM, VR, ML, MR, HL, HM, HR) and the direction of travel.

2. Driver assistance system according to Claim 1, **characterized in that**
a current speed of the motor vehicle (1) is determined during movement of the motor vehicle (1) relative to the at least one object (6, 7) and the respective installation position (VL, VM, VR, ML, MR, HL, HM, HR) of the at least two sensors (4) is additionally determined on the basis of the speed.

3. Motor vehicle (1) having a driver assistance system (2) according to one of the preceding claims.

## Revendications

1. Système d'assistance au conducteur (2) pour un véhicule automobile (1), comprenant au moins deux capteurs et comprenant un dispositif de commande (3), lequel est configuré pour mettre en œuvre un procédé de détermination d'une position de montage (VL, VM, VR, ML, MR, HL, HM, HR) d'au moins deux capteurs (4) d'un véhicule automobile (1), avec lequel des données des au moins deux capteurs (4), lesquels sont disposés sur et/ou dans le véhicule automobile (1), sont reçues au moyen d'un dispositif de commande (3) du véhicule automobile (1), **caractérisé en ce que**
les au moins deux capteurs (4) sont réalisés sous la forme de capteurs radar et/ou de dispositifs de balayage à laser, **en ce qu'**un sens de circulation actuel du véhicule automobile (1) pendant le déplacement du véhicule automobile (1) par rapport à au moins un objet (6, 7) est déterminé, l'au moins un objet (6, 7) par rapport auquel le véhicule automobile (1) effectue un déplacement relatif étant fixe ou l'objet (6, 7) effectuant un mouvement en ligne droite par rapport au véhicule automobile, **en ce que** pendant un déplacement du véhicule automobile (1) par rapport à l'au moins un objet (6, 7), des valeurs relatives sont déterminées continuellement avec chacun des au moins deux capteurs (4), lesquelles décrivent un écart et un angle respectifs entre le capteur (4) et l'au moins un objet (6, 7) en tant que position de l'au moins un objet (6, 7), de sorte qu'une variation dans le temps de la position de l'au moins un objet (6, 7) est déterminée, **en ce que** des trajectoires (12) dans un système de coordonnées de capteur (13) sont déterminées à l'aide d'une modification des valeurs relatives respectives, **en ce que** des positions de montage (VL, VM, VR, ML, MR, HL, HM, HR) prédéterminées pour les au moins deux capteurs (2) sont enregistrées dans le dispositif de commande (3) et/ou dans les au moins deux capteurs, et la position de montage (VL, VM, VR, ML, MR, HL, HM, HR) respective des au moins deux capteurs (4) est déterminée à l'aide des trajectoires (12) déterminées et à l'aide des positions de montage (VL, VM, VR, ML, MR, HL, HM, HR) prédéterminées enregistrées et du sens de circulation.

2. Système d'assistance au conducteur selon la revendication 1, **caractérisé en ce qu'**une vitesse actuelle du véhicule automobile (1) est déterminée pendant le déplacement du véhicule automobile (1) par rapport à l'au moins un objet (6, 7) et la position de montage (VL, VM, VR, ML, MR, HL, HM, HR) respective des au moins deux capteurs (4) est en plus déterminée à l'aide de la vitesse.

3. Véhicule automobile (1) comprenant un système d'assistance au conducteur (2) selon l'une des revendications précédentes.
